# EUROPEAN PATENT APPLICATION

(11) **EP 1 391 466 A2**
(43) Date of publication of application: **25.02.2004**
(21) Application number: 03019070.6
(22) Date of filing: 22.08.2003
(51) Int. Cl.: C08F 2/44, C08F 292/00

(54) **Resin particle containing coil-shaped carbon fiber and production method thereof**

(30) Priority: 23.08.2002 JP 2002243559; 14.07.2003 JP 2003196832
(71) Applicant: Motojima, Seiji, Gifu-shi, Gifu-ken 502-0813 (JP); CMC Technology Development Co., Ltd., Kakamigahara City, Gifu 509-0108 (JP)
(72) Inventor: Hishikawa, Yukio, c/o CMC Technology Dev. Co., Ltd, Kakamigahara-shi, Gifu 509-0108 (JP); Yamada, Kazumi, Yasu-gun, Shiga-ken 520-2351 (JP)
(74) Representative: Reinhard - Skuhra - Weise & Partner

(57) **Abstract**

A resin particle of a first embodiment in accordance with the present invention contains a resin and coil-shaped carbon fiber. Content of the coil-shaped carbon fiber in the resin particle is 15 wt% or less. A resin particle of a second embodiment in accordance with the present invention contains a resin, coil-shaped carbon fiber and a foaming agent. Content of the coil-shaped carbon fiber in this resin particle is 15 wt% or less. The resin particles of both the first and second embodiments can be used for the purpose of absorbing electromagnetic waves.

## Description

### BACKGROUND OF THE INVENTION

The present invention relates to a resin particle used for the purpose of absorbing electromagnetic waves.

It is known that coil-shaped carbon fiber has a characteristic in which the fiber absorbs electromagnetic waves and converts the absorbed waves to heat. This characteristic of the coil-shaped carbon fiber is ascribable to the coil shape that is peculiar to the fiber. When electromagnetic waves are irradiated on the coil-shaped carbon fiber, the electromagnetic waves generate induced current due to induced electromotive force, which is consumed as Joule heat.

Japanese Laid-Open Patent Publication No. 2000-124658 discloses a resin particle containing coil-shaped carbon fiber. In the gazette, a description is found stating that when such resin particles are dispersed in a binder such as polyvinyl alcohol and applied onto a PET film, the PET film provide shielding for electromagnetic waves in the MHz region.

The resin particle described in the above gazette indeed contains coil-shaped carbon fiber, but no special attention has been paid to the content thereof. In the above gazette, paragraph [0029] includes a description that "15 parts by weight of the coil-shaped carbon fiber is dispersed in 60 parts by weight of styrene monomer" which is the only description that suggests content of coil-shaped carbon fiber in the resin particles. The quantity of coil-shaped carbon fiber relative to total content of coil-shaped carbon fiber in the resin particles, amounts to about 20 wt%.

While a resin particle containing such a high concentration of coil-shaped carbon fiber indeed provides shielding from electromagnetic waves owing to reflection based on conductivity provided by the coil-shaped carbon fiber, the resin particles nevertheless do not absorb electromagnetic waves.

### SUMMARY OF THE INVENTION

Accordingly, it is an objective of the present invention to provide resin particles that can absorb electromagnetic waves.

To achieve the above objective, the present invention provides a resin particle, which includes a resin and coil-shaped carbon fiber. Content of the coil-shaped carbon fiber in the resin particle is 15 wt% or less.

The present invention also provides a method for producing a resin particle. The method comprises performing suspension polymerization or emulsion polymerization of a monomer for obtaining polymer particles containing a resin; and adding coil-shaped carbon fiber to said monomer when said monomer is suspension polymerized or emulsion polymerized to thereby contain the coil-shaped carbon fiber in said polymer particles and obtain resin particles containing said resin and said coil-shaped carbon fiber, with content of the coil-shaped carbon fiber in said resin particles being 15 wt% or less.

The present invention further provides a foaming particle, which includes a resin, coil-shaped carbon fiber and a foaming agent. Content of the coil-shaped carbon fiber in the foaming particle is 15 wt% or less.

In addition, the present invention provides a method for producing a foaming particle. The method comprises performing suspension polymerization or emulsion polymerization of a monomer for obtaining polymer particles containing a resin; adding coil-shaped carbon fiber to said monomer when said monomer is suspension polymerized or emulsion polymerized to thereby contain the coil-shaped carbon fiber in said polymer particles; and impregnating a foaming agent into said polymer particles containing the coil-shaped carbon fiber to thereby obtain foaming particles containing the resin, the coil-shaped carbon fiber and the foaming agent, with content of the coil-shaped carbon fiber in said foaming particles being 15 wt% or less.

Furthermore, the present invention provides a foamed particle obtained by the process comprising foaming a resin particle containing a resin and coil-shaped carbon fiber with a foaming agent. Content of the coil-shaped carbon fiber in said foamed resin particle is 15 wt% or less.

The present invention also provides a molded foam obtained by the process comprising foaming and molding resin particles containing a resin and coil-shaped carbon fiber with a foaming agent. Content of the coil-shaped carbon fiber in said resin particles is 15 wt% or less.

The present invention further provides a method for producing a molded foam. The method comprises obtaining preliminarily foamed particles by foaming resin particles in which said resin particles contain a resin, coil-shaped carbon fiber and a foaming agent, with content of the coil-shaped carbon fiber in said resin particles being 15 wt% or less; filling a mold with said preliminarily foamed particles; and foaming and molding said preliminarily foamed particles filling the mold at the same time to thereby obtain said molded foam.

Furthermore, the present invention provides a method for producing a molded foam. The method comprises filling a mold with resin particles in which said resin particles contain a resin, coil-shaped carbon fiber and a foaming agent, with content of the coil-shaped carbon fiber in said resin particles being 15 wt% or less; and foaming and molding said resin particles filling the mold at the same time to thereby obtain said molded foam.

Other aspects and advantages of the invention will become apparent from the following description, illustrating by way of example the principles of the invention.

### DETAILED DESCRITPION OF THE PREFERRED EMBODIMENTS

A first embodiment of the present invention will now be described.

Resin particles according to the first embodiment contain both a resin and coil-shaped carbon fiber. The coil-shaped carbon fiber is dispersed in the resin. The particle size of the resin particle is preferably 5 µm to 10 mm.

The content of the coil-shaped carbon fiber in the resin particles is 15 wt% or less, preferably 1 to 10 wt%. Coil diameter of the coil-shaped carbon fiber is preferably 1 nm to 100 µm, and length of the coil-shaped carbon fiber is preferably 100 nm to 10 mm.

A preferable coil-shaped carbon fiber is coil-shaped carbon fiber produced by the chemical vapor deposition method (CVD method). In the chemical vapor deposition method, a source gas such as acetylene is thermolyzed in the presence of a catalyst such as nickel, and coil-shaped carbon coil is thereby produced from the source gas.

Examples of the above described resin include, for example, vinyl resins such as a styrene based resin, an acrylic based resin, a methacrylic based resin, or a maleimide based resin. The resin contained in the resin particles may be composed of either a single type of resin or a resin mixture composed of two or more types of resins.

The resin particles, as is, can be utilized in applications for absorbing electromagnetic waves. Otherwise, the resin particle may be utilized in applications for absorbing electromagnetic waves, after the resin particles have been molded by a molding method well known in the art, into a desired shape such as a plate, a film, a block or a fiber shape. Alternatively, the resin particle may be utilized in applications for absorbing electromagnetic waves after the resin particles have been dispersed in a base material. The form of the base material takes, for example, a paste, gel, liquid or a solid form. The base material may be the same type of resin as that contained in the resin particle, it may be different in type from the resin contained in the resin particle, or it may be a material other than resin.

Now a method for producing the resin particles will be described.

The production method for the resin particles comprises producing polymer particles by suspension polymerizing a monomer. When the monomer is suspension polymerized, the coil-shaped carbon fiber is added to the monomer. The coil-shaped carbon fiber is thereby made to be contained in the above described polymer particles.

The suspension polymerization of the monomer is conducted in an aqueous medium that is an aqueous solution containing a suspension agent. The suspension agent plays a role in stabilizing the monomer as oil drops in the aqueous medium. Examples of the suspension agent include, for example, water soluble polymers such as polyvinyl alcohol and polyvinylpyrrolidone, and scarcely water soluble inorganic salts such as calcium tertiary phosphate, magnesium pyrophosphate and calcium carbonate. The aqueous medium may further contain a suspension aid, such as sodium dodecylbenzenesulfonate.

Examples of the monomer include, for example, styrene based monomers such as styrene, α-methylstyrene, p-methylstyrene, t-butylstyrene and chlorostyrenes; acrylate based monomers such as methylacrylate, ethylacrylate and butylacrylate; methacrylate based monomers such as methacrylic acid, methylmethacrylate, ethylmethacrylate, propylmethacrylate, butylmethacrylate, 2-ethylhexylmethacrylate, octylmethacrylate, isodecylmethacrylate, laurylmethacrylate, tridecylmethacrylate, stearylmethacrylate and cyclohexylmethacrylate; vinyl cyanide based monomers such as acrylonitrile and methacrylonitirle; maleimide based monomers such as maleimide, N-methylmaleimide, N-phenylmaleimide and N-cyclohexylmaleimide; and conjugated dienes such as butadiene and isoprene. The monomer utilized when the resin particle is produced may be composed of either a single type of monomer or a mixture of two or more types of monomers, and may contain a multifunctional monomer such as divinylbenzene and ethyleneglycol methacrylate.

In the above described suspension polymerization, it is preferable that a dispersant and a surfactant (dispersion aid) are additionally added to the monomer. The addition of a dispersant and a surfactant makes the coil-shaped carbon fiber disperse stably in the monomer.

Examples of the above described dispersant include, for example, aliphatic acids such as oleic acid and stearic acid and salts thereof; silane based and titanium based coupling agents; and various types of polymer compounds. A preferable dispersant is a polymer compound containing polyoxyalkylene groups and acid anhydride groups, and a particularly preferable dispersant includes a maleic anhydride copolymer that has a part represented by the below described formula (1) or formula (2) and a ring-opening reaction product thereof. It is preferable that the above described maleic anhydride copolymer and ring-opening reaction product thereof are insoluble in water. The addition amount of the dispersant is preferably 0.05 wt% or more in relation to coil-shaped carbon fiber, and is preferably 10 wt% or less in relation to coil-shaped carbon fiber.

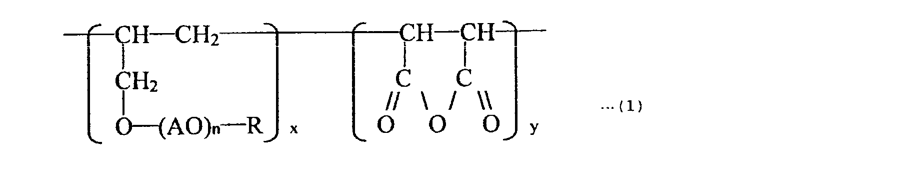

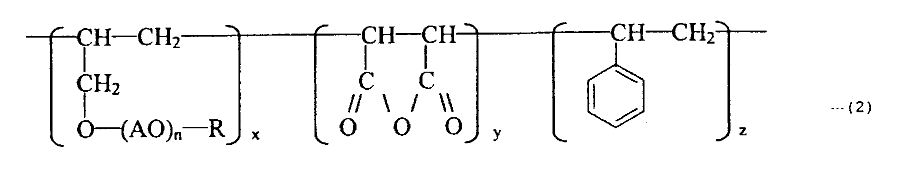

In formula (1) and formula (2), the letter A represents an alkylene group, the letter R represents an alkyl group in which the number of carbon atoms is any one of the integers from 1 to 18 or a hydrogen atom, the letter n represents any one of the integers from 1 to 20, and the letter x, y and z represent the copolymerization ratios of the respective units.

The above described surfactant is preferably an anionic surfactant, more preferably an alkyl phosphate such as lauryl phosphate, an alkyl phosphate salt such as sodium lauryl phosphate, and a polyoxyethylene alkyl phosphate salt such as sodium polyoxyethylene lauryl ether phosphate. The addition amount of the surfactant is preferably 0.0005 wt% or more in relation to the above described monomer, more preferably 0.05 wt% or less in relation to the monomer.

In the suspension polymerization, a polymerization initiator may be further added to the monomer. Examples of the polymerization initiator include, for example, monofunctional organic peroxides such as lauroyl peroxide, benzoyl peroxide, t-butylperoxy-2-ethylhexanoate, t-butylperoxy benzoate and t-butylperoxypivalate; difunctional organic peroxide such as 1,1-di-(t-butylperoxy)-3,3,5-trimethylcyclohexane, di-t-butyl peroxy trimethyladipate and di-t-butyl peroxy isophthalate; and azo compounds such as azobisisobutyronitrile and azobismethylvaleronitrile. The addition amount of the polymerization initiator is preferably 0.03 wt% or more in relation to the monomer, and is preferably 5 wt% or less in relation to the monomer.

In the suspension polymerization, a chain transfer agent may be further added to the monomer. Examples of the chain transfer agent include, for example, n-dodecyl mercaptan, n-octyl mercaptan, n-butyl mercaptan, t-butyl mercaptan and α-methylstyrene dimer.

The first embodiment has the following advantages.

The resin particles can absorb electromagnetic waves because the content of the coil-shaped carbon fiber is 15 wt% or less. In cases where the content of the coil-shaped carbon fiber exceeds 15 wt%, almost all the individual coil-shaped carbon fibers in a resin particle contact each other. In this case, the resin particle indeed reflects electromagnetic wave because conductivity is increased, but does not absorb electromagnetic waves because the individual coil-shaped carbon fibers do not function as a solenoid. On the contrary, in cases where content of the coil-shaped carbon fiber is 15 wt% or less, at least some of the individual coil-shaped carbon fibers are independent of the other individual coil-shaped carbon fibers irrespective of the sizes of the individual coil-shaped carbon fibers. The individual coil-shaped carbon fibers independent of the other coil-shaped carbon fibers function as a solenoid and accordingly absorb electromagnetic waves. Consequently, the resin particles absorb electromagnetic waves.

Additionally, in the resin particles, the coil-shaped carbon fiber functions as a reactance, while the resin functions as a capacitance. Accordingly, in the resin particles, a configuration results in which a large number of LC circuits are connected to each other electrostatically. Thus, the resin particles strongly absorb the electromagnetic waves corresponding to the resonance frequency of the LC circuit.

In cases where content of the coil-shaped carbon fiber in the resin particles is 1 to 10 wt%, the electromagnetic wave absorption characteristic of the resin particles is improved.

In cases where the coil-shaped carbon fiber in the resin particles is coil-shaped carbon fiber produced by the chemical vapor deposition method, the electromagnetic absorption characteristic of the resin particles is improved. This is because the electromagnetic wave absorptivity of the coil-shaped carbon fiber produced by the chemical vapor deposition method is higher than electromagnetic wave absorptivities of other coil-shaped carbon fibers.

In cases where a dispersant and a surfactant are added to the monomer in the suspension polymerization, even if no surface treatment of the coil-shaped carbon fiber is conducted beforehand, the coil-shaped carbon fiber is stably dispersed in the monomer. The above described surface treatment includes the aliphatic acid treatment, higher ester treatment, silane coupling treatment, and coating treatment with various resins.

In cases where a polymer compound having polyoxyalkylene groups and acid anhydride groups is used as a dispersant, the coil-shaped carbon fiber is highly dispersed in the monomer. Accordingly, in resin particles thus obtained, the dispersibility of the coil-shaped carbon fiber is improved and the electromagnetic wave absorption characteristic is improved. Among other things, in cases where the above described maleic anhydride copolymer or the ring-opening reaction product thereof is used as a dispersant, the quality variation of the resin particles thus obtained, in particular, the variation associated with the frequency range of the electromagnetic waves that can be absorbed becomes small. For example, the variation of the above described frequency range is ±10 GHz or more when neither a dispersant nor a surfactant is used, but becomes ±5 GHz or less when the above described maleic anhydride copolymer or the ring-opening reaction product thereof is used as a dispersant.

In cases where the above described maleic anhydride copolymer or the ring-opening reaction product thereof is used as a dispersant, transfer of the coil-shaped carbon fiber into an aqueous phase is prevented in the suspension polymerization. Consequently, extreme lowering of content of the coil-shaped carbon fiber in the resin particles in relation to the addition amount of the coil-shaped carbon fiber, can be prevented.

In cases where an anionic surfactant is used as the above described surfactant, the coil-shaped carbon fiber is highly dispersed in the monomer. Consequently, in resin particles thus obtained, the dispersibility of the coil-shaped carbon fiber is improved, and the electromagnetic wave absorption characteristic is improved. Among other things, in the case where an alkyl phosphate, an alkyl phosphate salt or a polyoxyethylene alkyl phosphate salt is used as the surfactant, the quality variation of the resin particles thus obtained, in particular, the variation associated with the frequency range of electromagnetic waves that can be absorbed becomes small. For example, the variation of the above described frequency range is ±10 GHz or more when neither a dispersant nor a surfactant is used, but becomes ±2 GHz or less when an alkyl phosphate, an alkyl phosphate salt or a polyoxyethylene alkyl phosphate salt is used as the surfactant.

In cases where the addition amount of a dispersant is 0.05 wt% or more in relation to the coil-shaped carbon fiber, the effect of the dispersant is displayed without fail so that the coil-shaped carbon fiber is stably dispersed in the monomer.

In cases where the addition amount of a dispersant is 10 wt% or less in relation to the coil-shaped carbon fiber, an adverse effect caused by the excessive addition amount of the dispersant can be prevented.

In cases where the addition amount of a surfactant is 0.0005 wt% or more in relation to the monomer, the effect of the surfactant is displayed without fail so that the coil-shaped carbon fiber is stably dispersed in the monomer.

In cases where the addition amount of a surfactant is 0.05 wt% or less in relation to the monomer, an adverse effect caused by the excessive addition amount of the surfactant can be prevented.

The content of the coil-shaped carbon fiber in a molded body molded from the resin particles is of course 15 wt% or less because the content of the coil-shaped carbon fiber in the resin particles is 15 wt% or less. In cases where the content of the coil-shaped carbon fiber in a molded body is 15 wt% or less, at least some of the individual coil-shaped carbon fibers function as solenoid to absorb electromagnetic waves so that the molded body likewise absorbs electromagnetic waves. In this connection, Japanese Laid-Open Patent Publication No. 5-21984 discloses an electromagnetic wave shield composite material in which coil-shaped carbon fiber is dispersed in a base material. However, in one paragraph [0008] in the above gazette, a description is found stating that "it is preferable that the coil-shaped carbon fiber is dispersed in the base material in the ratio of 20 to 60 wt%," which means that the content of the coil-shaped carbon fiber in the electromagnetic wave shield composite material is not necessarily 15 wt% or less. Accordingly, the electromagnetic wave shield composite material does not necessarily absorb electromagnetic waves.

A molded body molded from the resin particles has an excellent electromagnetic wave absorption characteristic as compared to another molded body molded by adding coil-shaped carbon fiber directly to a base material. Among other things, the quality variation of the first molded body, in particular, the variation associated with the frequency range of the electromagnetic waves that can be absorbed is small as compared to that in the second molded body. This is because the dispersion of the coil-shaped carbon fiber in the first molded body is better than that in the second molded body.

The resin particles in accordance with the first embodiment absorb effectively, particularly electromagnetic waves in the range from 1 to 100 GHz. The resin particles are thus compatible with the current trend that the electromagnetic wave range used in various electronic instruments is making the transition from the megahertz region to the gigahertz region.

A second embodiment of the present invention will now be described.

Resin particles according to the second embodiment contain a resin, coil-shaped carbon fiber and a foaming agent. In other words, the resin particles are foaming particles. The resin particles are produced by impregnating the above described resin particles with the foaming agent.

The content of the coil-shaped carbon fiber in the resin particles is 15 wt% or less, preferably 1 to 10 wt%. The content of the foaming agent in the resin particles is preferably 0.1 to 15 wt%.

It is preferable that the above described foaming agent is in a liquid state or a gaseous state at room temperature. Examples of preferable foaming agents include aliphatic hydrocarbons such as propane, butane and pentane; alicyclic hydrocarbons such as cyclohexane; halogenated hydrocarbons such as methyl chloride and difluorodichloroethane; and inert gases such as carbon dioxide and nitrogen.

The resin particles can be utilized for absorbing electromagnetic waves, as is, after being made into foam, or after being foam molded into a desired shape.

When the resin particles are made into foam, foamed particles (preliminarily foamed particles) are obtained. The bulk density of the foamed particles is preferably 0.01 to 1.0 g/cm³. The bulk density of the foamed particles is derived by dividing the mass of the foamed particles by the bulk volume of the foamed particles in conformity with JIS K 7222.

When the resin particles are subjected to foam molding, a molded foam is obtained. The apparent density of the molded foam is preferably 0.01 to 1.0 g/cm³. The apparent density of the molded foam is derived by dividing the mass of the molded foam by the apparent volume of the molded foam in conformity with JIS K 7322. More specifically, the apparent density of the molded foam is measured for a specimen cut out from the molded foam after72 hours or more has elapsed since completion of the molding. The specimen is subjected to the measurement after the specimen has been exposed for 16 hours or more in an atmosphere in which the temperature is 23°C±2°C and the humidity is 50%+5% or in which the temperature is 27°C±2°C and the humidity is 65°C±5°C.

Production methods for a molded foam produced by the foam molding method includes, for example, the following two methods.

A first method comprises a step in which the preliminarily foamed particles are obtained from resin particles by foaming thereof, a step for filling a mold with the preliminarily foamed particles, and a step in which the mold filled with preliminarily foamed particles is heated and the molded foam is thereby obtained. It is preferable that the bulk density of the preliminarily foamed particles be from 0.01 to 1.0 g/cm³.

A second method comprises a step for filling a mold with the resin particles, and a step in which the mold filled with resin particles is heated and the molded foam is thereby obtained.

The second embodiment has the following advantages in addition to the advantages possessed by the first embodiment.

Foamed particles produced from the resin particles of the second embodiment are smaller in bulk density and lighter in weight than the resin particles of the first embodiment.

A molded foam produced from the resin particles of the second embodiment is smaller in apparent density and lighter in weight than a molded body molded from the resin particles of the first embodiment.

It should be apparent to those skilled in the art that the present invention may be embodied in many other specific forms without departing from the spirit or scope of the invention. Particularly, it should be understood that the invention may be embodied in the following forms.

The resin particles of the first embodiment may be produced not through suspension polymerization but through emulsion polymerization. In this case, the polymer particles are produced by emulsion polymerizing the monomer. When the monomer is emulsion polymerized, the coil-shaped carbon fiber is added to the monomer, and the coil-shaped carbon fiber is thereby made to be contained in the above described polymer particles.

Either the dispersant or the surfactant added at the time of producing the resin particles of the first embodiment may be omitted.

The step for impregnating the resin particles of the first embodiment with a foaming agent for the purpose of obtaining the resin particles of the second embodiment may be conducted successively after the suspension polymerization, or may be conducted separately with a certain elapsed time from the completion of the suspension polymerization.

The resin particles of the second embodiment may further contain a foaming aid. In this case, the resin particles are moderately softened, and the foamability of the resin particles is improved. Accordingly, it becomes easier to obtain a molded foam small in apparent density from the resin particles. Preferable foaming aids include solvents such as toluene, xylene, ethylbenzene and styrene; and plasticizers such as dioctyl adipate, dibutyl phthalate and dioctyl phthalate.

The resin particles of the second embodiment may be coated with a coating agent. Examples of suitable coating agents include, for example, metal soaps such as zinc stearate and calcium stearate; aliphatic amides such as ethylene bisamide and stearic acid amide; stearic acid glyceride; silicones; and hardened castor oil. In this case, mutual bonding of individual preliminarily foamed particles is prevented. Additionally, fusion bondability of the molded foam is improved and the surface of the molded foam becomes better.

The present invention will further be described with examples and comparative examples.

### <Example 1>

To a mixture prepared from 1,000 g of methylmethacrylate, 3 g of α-methylstyrene dimer, 0.6 g of a polymer compound (MALIALIM AAB-0851, manufactured by NOF Corporation) containing polyoxyalkylene groups and acid anhydride groups and 0.3 g of lauryl phosphate, 1 g of the coil-shaped carbon fiber was added, and the mixture was stirred for 10 minutes with a homomixer at a rate of 6,000 rpm. Then, to the mixture, 10 g of azobisdimethylvaleronitrile and 1 g of t-butylperoxy-2-ethylhexanoate were added, and further 15 g of magnesium pyrophosphate and 3,000 ml of water were added. The mixture obtained was maintained at 55°C for 4 hours to undergo suspension polymerization while being stirred at a rate of 240 rpm, and consequently resin particles containing the coil-shaped carbon fiber at 0.1 wt% was obtained. The obtained resin particles had a particle size distribution ranging from 0.01 mm to 2 mm.

### <Examples 2 to 11>

In each of Examples 2 to 11, the addition amount of the coil-shaped carbon fiber was different from the addition amount of the coil-shaped carbon fiber at the time of production of the resin particles of Example 1. More specifically, the addition amount of the coil-shaped carbon fiber was altered to 5 g in Example 2, to 10 g in Example 3, to 15 g in Example 4, to 20 g in Example 5, to 30 g in Example 6, to 50 g in Example 7, to 80 g in Example 8, to 100 g in Example 9, to 120 g in Example 10 and to 150 g in Example 11. Consequently, resin particles containing the coil-shaped carbon fiber at 0.5 wt% was obtained in Example 2, a resin particle containing the coil-shaped carbon fiber at 1 wt% was obtained in Example 3, resin particles containing the coil-shaped carbon fiber at 1.5 wt% was obtained in Example 4, resin particles containing the coil-shaped carbon fiber at 2 wt% was obtained in Example 5, resin particles containing the coil-shaped carbon fiber at 3 wt% was obtained in Example 6, resin particles containing the coil-shaped carbon fiber at 5 wt% was obtained in Example 7, resin particles containing the coil-shaped carbon fiber at 8 wt% was obtained in Example 8, resin particles containing the coil-shaped carbon fiber at 10 wt% was obtained in Example 9, resin particles containing the coil-shaped carbon fiber at 12 wt% was obtained in Example 10, and resin particles containing the coil-shaped carbon fiber at 15 wt% was obtained in Example 11. All of these resin particles had a particle size distribution ranging from 0.01 mm to 2 mm.

### <Example 12>

To a mixture prepared from 1,000 g of styrene, 0.6 g of a polymer compound (MALIALIM AAB-0851, manufactured by NOF Corporation) containing polyoxyalkylene groups and acid anhydride groups and 0.3 g of lauryl phosphate, 10 g of the coil-shaped carbon fiber was added, and the mixture was stirred for 10 minutes with a homomixer at a rate of 6,000 rpm. Then, to the mixture, 3 g of t-butylperoxy-2-ethylhexanoate and 1 g of t-butylperoxybenzoate were added, and further 15 g of magnesium pyrophosphate and 3,000 ml of water were added. The mixture obtained was maintained at 90°C for 8 hours to undergo suspension polymerization while being stirred at a rate of 240 rpm, and consequently resin particles containing the coil-shaped carbon fiber at 1 wt% was obtained.

### <Example 13>

To a mixture prepared from 850 g of methylmethacrylate, 150 g of butylmethacrylate, 3 g of α-methylstyrene dimer, 0.6 g of a polymer compound (MALIALIM AAB-0851, manufactured by NOF Corporation) containing polyoxyalkylene groups and acid anhydride groups and 0.3 g of lauryl phosphate, 30 g of the coil-shaped carbon fiber was added, and the mixture was stirred for 10 minutes with a homomixer at a rate of 6,000 rpm. Then, to the mixture, 10 g of azobisdimethylvaleronitrile and 1 g of t-butylperoxy-2-ethylhexanoate were added, and further 15 g of magnesium pyrophosphate and 3,000 ml of water were added. The mixture obtained was maintained at 55°C for 4 hours to undergo suspension polymerization while being stirred at a rate of 240 rpm, and consequently resin particles containing the coil-shaped carbon fiber at 3 wt% was obtained. Then, for the purpose of impregnating the obtained resin particles with pentane, 70 g of pentane, as the foaming agent, was added and the mixture was maintained at 110°C for 6 hours. Consequently, foaming particles containing the coil-shaped carbon fiber at 3 wt% was obtained. The foaming particles had a particle size distribution ranging from 0.01 mm to 2 mm.

### <Comparative Examples 1 to 6>

In each of Comparative Examples 1 to 6, the addition amount of the coil-shaped carbon particle was different from the amount of the coil-shaped carbon fiber added at the time of producing the resin particles of Example 1. More specifically, the addition amount of the coil-shaped carbon fiber was altered to 180 g in Comparative Example 1, to 200 g in Comparative Example 2, to 300 g in Comparative Example 3, to 400 g in Comparative Example 4, to 500 g in Example 5 and to 600 g in Example 6. Consequently, resin particles containing the coil-shaped carbon fiber at 18 wt% was obtained in Comparative Example 1, resin particles containing the coil-shaped carbon fiber at 20 wt% was obtained in Comparative Example 2, resin particles containing the coil-shaped carbon fiber at 30 wt% was obtained in Comparative Example 3, resin particles containing the coil-shaped carbon fiber at 40 wt% was obtained in Comparative Example 4, resin particles containing the coil-shaped carbon fiber at 50 wt% was obtained in Comparative Example 5, and resin particles containing the coil-shaped carbon fiber at 60 wt% was obtained in Comparative Example 6. All of these resin particles had a particle size distribution ranging from 0.01 mm to 2 mm.

### <Evaluation Test 1>

Test specimens were prepared by filling each of the resin particles of Examples 1 to 5, 7, 9 and 11 and the resin particles of Comparative Example 2 into a first container made of PET of 140 mm in inside width × 140 mm in inside height x 8 mm in inside depth and a second container made of PET of 140 mm in inside width × 140 mm in inside height × 3 mm in inside depth. For the purpose of evaluating the electromagnetic wave absorption characteristics and electromagnetic wave reflection characteristics of the test specimens, the return losses and transmission losses for 1 to 110 GHz electromagnetic waves caused by the individual test specimens were measured by the free space method. More specifically, the return loss measurements were made on the test specimens each contained in the first container, while the transmission loss measurements were made on the test specimens each contained in the second container.

Consequently, the return losses obtained for the test specimen based on the resin particles of Example 1 was -3 dB at maximum, while the transmission loss obtained for the same specimen was-2 dB at maximum. The return loss obtained for the test specimen based on the resin particles of Example 2 was -4 dB for an electromagnetic wave frequency of 35 GHz, -6 dB for 60 GHz and -7 dB for 90 GHz, and the transmission loss was -2 dB for an electromagnetic wave frequency of 1.5 GHz, -5 dB for 6 GHz, -8 dB for 13 GHz, -12 dB for 25 GHz, -3 dB for 50 GHz, -14 dB for 75 GHz and -2 dB for 105 GHz. The return loss obtained for the test specimen based on the resin particles of Example 3 was -10 dB for electromagnetic wave frequencies of 5 GHz, 27 GHz and 45 GHz, -30 dB for 53 GHz and 64 GHz, -45 dB for 74 GHz, -21 dB for 83 GHz, -25 dB for 92 GHz and -27 dB for 100 GHz, and the transmission loss was -8 dB for an electromagnetic wave frequency of 1.5 GHz, -12 dB for 6 GHz, -28 dB for 13 GHz, -42 dB for 25 GHz, -18 dB for 50 GHz and -40 dB for 75 GHz. The return loss obtained for the test specimen based on the resin particles of Example 4 was -8 dB for electromagnetic wave frequencies of 5 GHz, 27 GHz and 45 GHz, -28 dB for 53 GHz, -27 dB for 64 GHz, -44 dB for 74 GHz, -17 dB for 83 GHz, -23 dB for 92 GHz and -25 dB for 100 GHz, and the transmission loss was -7 dB for an electromagnetic wave frequency of 1.5 GHz, -11 dB for 6 GHz, - 24 dB for 13 GHz, -37 dB for 25 GHz, -15 dB for 50 GHz, -35 dB for 75 GHz and -17 dB for 105 GHz. The return loss obtained for the test specimen based on the resin particles of Example 5 was -4 dB for electromagnetic wave frequencies of 5 GHz, 27 GHz and 45 GHz, -22 dB for 53 GHz, -19 dB for 64 GHz, -30 dB for 74 GHz, -9 dB for 83 GHz, -10 dB for 92 GHz and -15 dB for 100 GHz, and the transmission loss was -6 dB for an electromagnetic wave frequency of 1.5 GHz, -10 dB for 6 GHz, - 21 dB for 13 GHz, -33 dB for 25 GHz, -12 dB for 50 GHz, -30 dB for 75 GHz and -14 dB for 105 GHz. The return loss obtained for the test specimen based on the resin particles of Example 7 was -11 dB for an electromagnetic wave frequency of 27 GHz, -14 dB for 53 GHz and -7 dB at maximum for 60 to 110 GHz, and the transmission loss was -2 dB for an electromagnetic wave frequency of 1.5 GHz, -6 dB for 6 GHz, -9 dB for 13 GHz, -12 dB for 25 GHz, -2 dB for 50 GHz, -14 dB for 75 GHz and -3 dB for 105 GHz. The return loss obtained for the test specimen based on the resin particles of Example 9 was -8 dB for an electromagnetic wave frequencies of 27 GHz and -7 dB at maximum for 30 to 110 GHz, and the transmission loss was -7 dB at maximum. The return loss obtained for the test specimen based on the resin particles of Example 11 was -10 dB for an electromagnetic wave frequencies of 5 GHz and -6 dB at maximum for 10 to 110 GHz, and the transmission loss was -6 dB at maximum. On the other hand, the return loss and transmission loss obtained for the test specimen based on the resin particles of Comparative Example 2 were approximately zero whatever the electromagnetic wave frequency.

The above results reveal that the resin particles of Comparative Example 2 scarcely absorb electromagnetic waves ranging from 1 to 110 GHz, whereas resin particles of Examples 1 to 5, 7, 9 and 11 absorb well electromagnetic waves ranging from 1 to 110 GHz. The return losses and transmission losses obtained for the test specimens based on the resin particles of Examples 3 to 5 are particularly large, and hence it is suggested that the resin particles containing the coil-shaped carbon fiber at 1 to 2 wt% are imparted with particularly excellent electromagnetic wave absorptivity.

The return losses and transmission losses for electromagnetic waves in the kilohertz range and the megahertz range caused by the individual test specimens were measured in a similar manner. Consequently, the return losses obtained for the test specimens based on the resin particles of Examples 1 to 5, 7, 9 and 11 were found to be -7 dB at maximum, while the transmission losses were found to be approximately zero. On the other hand, the return loss obtained for the test specimen based on the resin particles of Comparative Example 2 was found to be approximately zero, while transmission losses for electromagnetic waves of 30 to 500 MHz were -35 dB at maximum for the electric field component and -5 dB at maximum for the magnetic field component; the transmission losses for electromagnetic waves falling in the other ranges were -5 dB at maximum for the electric field component and -3 dB at maximum for the magnetic field component. These results show that the resin particles of Comparative Example 2 indeed reflects but does not absorb electromagnetic waves in the kilohertz range and in the megahertz range.

The return losses and transmission losses for electromagnetic waves of 110 GHz to 100 THz were measured in a similar manner. Consequently, the return losses and transmission losses obtained for the test specimens based on the resin particles of Examples 3 to 5 were found to be -10 dB on average, while the return losses and transmission losses obtained for the test specimens based on the resin particles of Examples 1, 2, 7, 9 and 11 were found to be -6 dB on average. On the other hand, the return loss and transmission loss obtained for the test specimen based on the resin particles of Comparative Example 2 were found to be approximately zero.

### <Evaluation Test 1>

A molded foam of 13 mm in thickness and 0.5 g/cm³ in apparent density was produced from the foaming particles of the Example 13 by a foam molding method. For the purpose of evaluating the electromagnetic wave absorption characteristic of the molded foam, the return loss for 1 to 110 GHz electromagnetic waves caused by the molded foam was measured by the free space method. Consequently, the measured return loss was -20 dB or less for any frequency in the electromagnetic wave range from 1 to 110 GHz. These results show that the molded foam absorbs well electromagnetic waves over a wide range of frequencies.

### <Evaluation Test 2>

The resin particles of Example 3 were classified to prepare the fractions respectively having average particle sizes of 0.01 mm, 0.1 mm, 1 mm and 2 mm for the resin particles contained. Test specimens were prepared by filling each of the above described fractions into a first container made of PET of 140 mm in inside width × 140 mm in inside height × 8 mm in inside depth and a second container made of PET of 140 mm in inside width x 140 mm in inside height × 3 mm in inside depth. For the purpose of evaluating the electromagnetic wave absorption characteristics and electromagnetic wave reflection characteristics of the test specimens, the return losses and transmission losses for 1 to 110 GHz electromagnetic waves caused by the individual test specimens were measured by the free space method. More specifically, the return loss measurements were made on the test specimens each contained in the first container, while the transmission loss measurements were made on the test specimens each contained in the second container.

Consequently, the return loss found for the test specimen prepared with the fraction of 0.01 mm in average particle size of the contained resin particles was -15 dB for an electromagnetic wave frequency of 21 GHz, -20 dB for 42 GHz and -25 dB for 84 GHz, while the transmission loss was -6 dB for an electromagnetic wave frequency of 21 GHz, -12 dB for 42 GHz, -22 dB for 84 GHz and -35 dB for 100 GHz. The return loss found for the test specimen prepared with the fraction of 0.1 mm in average particle size of the contained resin particles was -20 dB for an electromagnetic wave frequency of 21 GHz, -25 dB for 42 GHz and -30 dB for 84 GHz, while the transmission loss was -12 dB for an electromagnetic wave frequency of 17 GHz, -20 dB for 33 GHz and -32 dB for 67 GHz. The return loss found for the test specimen prepared with the fraction of 1 mm in average particle size of the contained resin particles was -25 dB for an electromagnetic wave frequency of 21 GHz, -40 dB for 42 GHz and -25 dB for 84 GHz, while the transmission loss was -16 dB for an electromagnetic wave frequency of 17 GHz, -33 dB for 33 GHz and -20 dB for 67 GHz. The return loss found for the test specimen prepared with the fraction of 2 mm in average particle size of the contained resin particles was -25 dB for an electromagnetic wave frequency of 17 GHz, -40 dB for 33 GHz and -25 dB for 67 GHz, while the transmission loss was -32 dB for an electromagnetic wave frequency of 17 GHz, -22 dB for 33 GHz and -14 dB for 67 GHz.

From the above results, it can be seen that with increasing average particle size of the resin particles contained in the fraction used in a test specimen, the electromagnetic wave range in which the return loss and transmission loss are caused by the test specimen shifts toward the lower frequencies. This indicates the possibility that a combination of resin particles with different average particle sizes extends the electromagnetic wave frequency range in which electromagnetic waves can be absorbed.

### <Evaluation Test 3>

Test specimens were prepared by filling the resin particles of Example 3 into a first container made of PET of 140 mm in inside width × 140 mm in inside height × 3 mm in inside depth, a second container made of PET of 140 mm in inside width × 140 mm in inside height × 5 mm in inside depth and a third container made of PET of 140 mm in inside width x 140 mm in inside height × 8 mm in inside depth. For the purpose of evaluating the electromagnetic wave absorption characteristics and electromagnetic wave reflection characteristics of the test specimens, the return losses for 1 to 110 GHz electromagnetic waves caused by the individual test specimens were measured by the free space method.

Consequently, the return loss found for the test specimen prepared with the first container was -10 dB for electromagnetic wave frequencies of 1 GHz, 6 GHz, 12 GHz and 35 GHz, -15 dB for 52 GHz, -18 dB for 67 GHz, -20 dB for 82 GHz and -25 dB for 95 GHz. The return loss found for the test specimen prepared with the second container was -10 dB for electromagnetic wave frequencies of 3 GHz, 10 GHz, 32 GHz and 50 GHz, -15 dB for 63 GHz, -20 dB for 80 GHz and 90 GHz, and - 40 dB for 102 GHz. The return loss found for the test specimen prepared with the third container was -10 dB for electromagnetic wave frequencies of 5 GHz, 27 GHz and 45 GHz, -30 dB for 53 GHz and 64 GHz, -45 dB for 74 GHz, -21 dB for 83 GHz, -25 dB for 92 GHz and -27 dB for 100 GHz.

From the above results, it can be seen that with increasing inside depth, namely, thickness, the electromagnetic wave frequency range in which the return loss and transmission loss caused by the test specimen are large, shifts toward the lower frequencies.

### <Evaluation Test 4>

A first molded body of 150 mm in length × 150 mm in width × 1 mm in thickness, a second molded body of 150 mm in length × 150 mm in width × 3 mm in thickness, and a third molded body of 150 mm in length × 150 mm in width × 8 mm in thickness were produced from the resin particles of Example 3 by the compression molding method. For the purpose of evaluating the electromagnetic wave absorption characteristics and electromagnetic wave transmission characteristics of the first to third molded bodies, the return losses and transmission losses for 1 to 110 GHz electromagnetic waves caused by the first to third molded bodies were measured by the free space method. More specifically, only the transmission loss was measured for the second molded body and only the return loss was measured for the third molded body.

Consequently, the return loss caused by the first molded body was -15 dB for electromagnetic wave frequencies of 19 GHz, 60 GHz and 85 GHz and -20 dB for 110 GHz, while the transmission loss was -20 dB or less for a plurality of frequency ranges. The transmission loss caused by the second molded body was -20 dB or less for a plurality of frequency ranges. The return loss caused by the third molded body was - 15 dB for electromagnetic wave frequencies of 1.2 GHz and 5.8 GHz, -20 dB for 55 GHz, -25 dB for 76 GHz and -30 dB for 100 GHz.

The above results show that the molded body produced from the resin particles of Example 3 absorbs well 1 to 110 GHz electromagnetic waves. Additionally, it can be seen from the above results that with increasing thickness of the molded body, the electromagnetic wave frequency range in which the return loss and transmission loss caused by the molded body are large, shifts toward the lower frequencies.

### <Evaluation Test 5>

Molded bodies of 150 mm in length × 150 mm in width × 8 mm in thickness were produced respectively from the resin particles of Examples 1 to 11 and Comparative Examples 1 to 6 by a compression molding method. For the purpose of evaluating the electromagnetic wave absorption characteristics and electromagnetic wave reflection characteristics of these molded bodies, the return losses for a 100 GHz electromagnetic wave caused by the molded bodies were measured by the free space method. The results obtained are shown in Table 1.

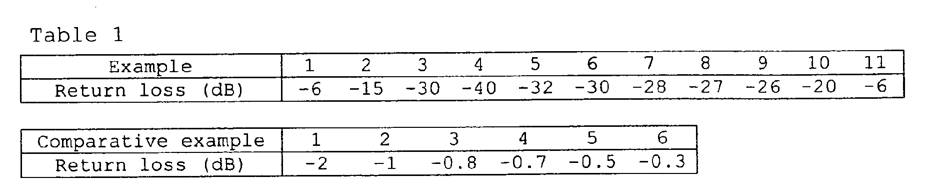

The results shown in Table 1 show that the molded bodies produced from the resin particles of Comparative Examples 1 to 6 scarcely absorb a 100 GHz electromagnetic wave, whereas the molded bodies produced from the resin particles of Examples 1 to 11 absorb well a 100 GHz electromagnetic wave.

### <Evaluation Test 6>

Test specimens were prepared by filling each of a paste, a gel and a solution which were all added with the resin particles of Example 3 at 50 wt% into a container made of PET of 140 mm in inside width × 140 mm in inside height × 1 mm in inside depth. For the purpose of evaluating the electromagnetic wave absorption characteristics and electromagnetic wave reflection characteristics, return losses and transmission losses for 1 to 110 GHz electromagnetic waves caused by the respective test specimens were measured by the free space method.

Consequently, the return losses caused by the test specimens respectively prepared with a paste, a gel and a solution were -10 dB for an electromagnetic wave frequency of 52 GHz, -15 dB for 67 GHz, -17 dB for 82 GHz and -20 dB for 95 GHz, and the transmission losses were -20 dB or less in a plurality of frequency ranges. The above results show that the test specimens prepared from the paste, gel and solution respectively added with the resin particle absorb well 1 to 110 GHz electromagnetic waves.

### <Evaluation Examples 7>

Through modifying the average coil length of the coil-shaped carbon fiber contained in the resin particles of Example 4, resin particles were prepared which contained in 1.5 wt% coil-shaped carbon fibers respectively having average coil lengths less than 0.1 mm, not less than 0.1 mm and less than 0.3 mm, not less than 0.3 mm and less than 0.5 mm, not less'than 0.5 mm and less than 1 mm, and not less than 1 mm. Then, molded bodies of 150 mm in length × 150 mm in width × 8 mm in thickness were produced from the respective resin particles by a compression molding method. For the purpose of evaluating the electromagnetic wave absorption characteristics and electromagnetic wave reflection characteristics of the molded bodies, the return losses of a 100 GHz electromagnetic wave caused by the respective molded bodies were measured by the free space method. The results obtained are shown in Table 2.

**Table 2**

| Average coil length | <0.1mm < 0.1mm | 0.1mm to 0.3mm | 0.3mm to 0.5mm | 0.5mm to 1mm | > 1mm ≥ 1mm |
|---|---|---|---|---|---|
| Return loss | -33dB | -37dB | -40dB | -42dB | -48dB |

The results listed in Table 2 show that with increasing average coil length of the coil-shaped carbon fiber contained in the resin particles, the electromagnetic wave absorptivity of the molded body produced from the resin particles improves.

In any of the above described evaluation tests 1 to 7, resin particles containing methylmethacrylate as a resin was utilized; similar effects were obtained for resin particles containing resins other than methylmethacrylate such as styrene in place of methylmethacrylate.

## Claims

1. A resin particle **characterized by** the resin particle including a resin and coil-shaped carbon fiber, wherein content of the coil-shaped carbon fiber in the resin particle is 15 wt% or less.

2. The resin particle according to claim 1, **characterized in that** the content of the coil-shaped carbon fiber in the resin particle is 1 to 10 wt%.

3. The resin particle according to claim 1 or 2, **characterized in that** said coil-shaped carbon fiber is produced by a chemical vapor deposition method.

4. A method for producing a resin particle, the method **characterized by**:
performing suspension polymerization or emulsion polymerization of a monomer for obtaining polymer particles containing a resin;
adding coil-shaped carbon fiber to said monomer when said monomer is suspension polymerized or emulsion polymerized to thereby contain the coil-shaped carbon fiber in said polymer particles and obtain resin particles containing said resin and said coil-shaped carbon fiber, with content of the coil-shaped carbon fiber in said resin particles being 15 wt% or less.

5. The method according to claim 4, **characterized in that** at least any one of a dispersant and a surfactant is added to said monomer so that the added coil-shaped carbon fiber stably disperses in said monomer.

6. The method according to claim 5, **characterized in that** said dispersant contains a maleic anhydride copolymer or a ring-opening reaction product thereof, wherein the maleic anhydride copolymer includes a part represented by the below described formula (1) or formula (2) 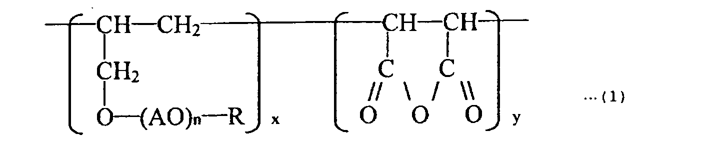 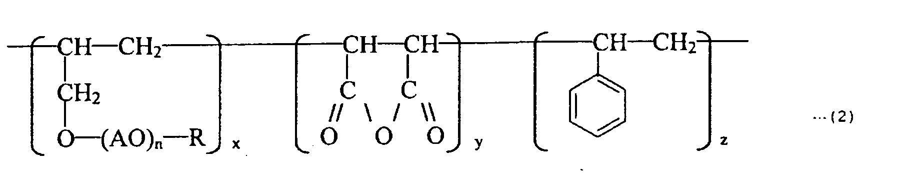 wherein the letter A represents an alkylene group, wherein the letter R represents an alkyl group with the number of carbon atoms of any one of the integers 1 to 18 or a hydrogen atom, wherein the letter n represents any one of the integers 1 to 20, and wherein the letter x, y and z represent the copolymerization ratios of the respective units.

7. The method according to claim 5 or 6, **characterized in that** said surfactant contains an alkyl phosphate, an alkyl phosphate salt or a polyoxyethylene alkyl phosphate salt.

8. A foaming particle **characterized by** the foaming particle including a resin, coil-shaped carbon fiber and a foaming agent, wherein content of the coil-shaped carbon fiber in the foaming particle is 15 wt% or less.

9. The foaming particle according to claim 8, **characterized in that** the content of the coil-shaped carbon fiber in the foaming particle is 1 to 10 wt%.

10. The foaming particle according to claim 8 or 9, **characterized in that** said coil-shaped carbon fiber is produced by a chemical vapor deposition method.

11. A method for producing a foaming particle, the method **characterized by**:
performing suspension polymerization or emulsion polymerization of a monomer for obtaining polymer particles containing a resin;
adding coil-shaped carbon fiber to said monomer when said monomer is suspension polymerized or emulsion polymerized to thereby contain the coil-shaped carbon fiber in said polymer particles; and
impregnating a foaming agent into said polymer particles containing the coil-shaped carbon fiber, to thereby obtain foaming particles containing the resin, the coil-shaped carbon fiber and the foaming agent, with content of the coil-shaped carbon fiber in said foaming particles being 15 wt% or less.

12. A foamed particle **characterized by** being obtained by the process comprising:
foaming a resin particle containing a resin and coil-shaped carbon fiber with a foaming agent, wherein content of the coil-shaped carbon fiber in said resin particle is 15 wt% or less.

13. The foamed particle according to claim 12, **characterized in that** the foamed particle has a bulk density of 0.01 to 1.0 g/cm³.

14. A molded foam **characterized by** being obtained by the process comprising:
foaming and molding resin particles containing a resin and coil-shaped carbon fiber with a foaming agent, wherein content of the coil-shaped carbon fiber in said resin particles is 15 wt% or less.

15. The molded foam according to claim 14, **characterized in that** the molded foam has an apparent density of 0.01 to 1.0 g/cm³.

16. A method for producing a molded foam, the method **characterized by**:
obtaining preliminarily foamed particles by foaming resin particles in which said resin particles contain a resin, coil-shaped carbon fiber and a foaming agent, with content of the coil-shaped carbon fiber in said resin particles being 15 wt% or less;
filling a mold with said preliminarily foamed particles; and
foaming and molding said preliminarily foamed particles filling the mold at the same time to thereby obtain said molded foam.

17. A method for producing a molded foam, the method **characterized by**:
filling a mold with resin particles in which said resin particles contain a resin, coil-shaped carbon fiber and a foaming agent, with content of the coil-shaped carbon fiber in said resin particles being 15 wt% or less; and
foaming and molding said resin particles filling the mold at the same time to thereby obtain said molded foam.
